# EUROPEAN PATENT APPLICATION

(11) **EP 4 770 046 A1**
(43) Date of publication of application: **01.07.2026**
(21) Application number: 25861179.7
(22) Date of filing: 25.07.2025
(51) Int. Cl.: H04L 61/3015, H01M 10/42, G06F 13/42, H01H 9/54

(54) **BATTERY SYSTEM AND OPERATING METHOD THEREOF**

(30) Priority: 02.09.2024 KR 20240118243; 23.10.2024 KR 20240145610
(71) Applicant: LG Energy Solution, Ltd., Seoul 07335 (KR)
(72) Inventor: KIM, Jaehwan, Daejeon 34122 (KR); HWANG, Jin Woo, Daejeon 34122 (KR); PARK, Mi So, Daejeon 34122 (KR)
(74) Representative: Plasseraud IP
(86) International application number: PCT/KR2025/011039
(87) International publication number: WO 2026/049314

(57) **Abstract**

A battery system according to an embodiment of the present invention may include a plurality of battery management systems (BMSs) connected in a daisy chain manner. Here, each of the BMSs may include: a control unit; and a photo relay that transmits a control signal for identifier (ID) allocation, which is input from a signal input terminal, to the control unit in an optical transmission manner. In addition, when the control unit receives the control signal from the photo relay, the control unit may allocate its own ID according to a predefined ID allocation protocol, and transmit the control signal to a signal input terminal of a next BMS through a signal output terminal.

## Description

### [Technical Field]

This application claims priority to and the benefit of Korean Patent Application No.10-2024-0118243 filed in the Korean Intellectual Property Office on September 2, 2024 and Korean Patent Application No.10-2024-0145610 filed in the Korean Intellectual Property Office on October 23, 2024 the entire contents of which are incorporated herein by reference.

The present invention relates to a battery system and an operating method thereof, and more particularly, to a battery system including a plurality of battery management systems (BMSs) and an operation method thereof.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be applied to a system in a form of an assembly such as a battery pack in which a plurality of battery cells is electrically connected or a battery rack in which battery packs are electrically connected according to system requirements. For an energy storage system (ESS) for smart grids, a high-capacity battery system with multiple battery racks connected in parallel may be applied to satisfy required capacity of the system.

For battery system operation, communication between an upper control apparatus and rack BMSs is essential. To distinguish each rack BMS, an identifier (ID) needs to be assigned to each rack BMS.

Typically, rack BMSs are connected in a daisy chain, with the first rack BMS defined as the master BMS and the remaining rack BMSs defined as slave BMSs. When the ID assignment process begins, the master BMS sequentially transmits a control signal for ID assignment to the slave BMSs. Upon receiving the control signal, the slave BMSs sequentially assign IDs according to a predefined ID assignment protocol.

However, if any intermediate slave BMS is off or in an abnormal state, the control signal for ID assignment cannot be transmitted to the next slave BMS, preventing the ID assignment process from completing.

Among the prior art documents relevant to the present invention, KR 10-2023-0134371 A is of some relevance.

### [Detailed Description of the Invention]

### [Technical Problem]

To obviate one or more problems of the related art, embodiments of the present disclosure provide a battery system capable of assigning an identifier (ID) to each of a plurality of BMSs.

To obviate one or more problems of the related art, embodiments of the present disclosure also provide an operation method of the battery system.

To obviate one or more problems of the related art, embodiments of the present disclosure also provide a battery management apparatus located in the battery system.

### [Technical Solution]

In order to achieve the objective of the present disclosure, a battery system according to embodiments of the present disclosure may include a plurality of battery management systems (BMSs) connected in a daisy chain configuration.

Here, each of the BMSs may include a controller; and a photo relay configured to transmit a control signal for identifier (ID) assignment, which is input from a signal input terminal, to the controller via optical transmission. Furthermore, the controller may be configured to, upon receiving the control signal from the photo relay, assign its own ID according to a predefined ID assignment protocol and transmit the control signal to the signal input terminal of the next BMS through a signal output terminal.

The photo relay may include a first input terminal connected to the signal input terminal; a second input terminal connected to a ground line; and an output terminal connected to the controller.

The controller may control a switch positioned on the ground line to a closed state, so that the control signal is transmitted to the controller via the photo relay.

Here, each of the BMSs may further include a bypass line one end of which is connected to the ground line and the other end of which is connected to the signal output terminal.

Here, the bypass line may be activated when the BMS is in an abnormal state or in an off state so that the control signal bypasses the controller and is transmitted to a signal input terminal of a next BMS.

A signal for controlling the switch positioned on the ground line to a closed state is not input when the BMS is in an abnormal state or in an off state, thereby activating the bypass line.

According to another embodiment of the present disclosure, a method for operating a battery system including a master BMS and a plurality of slave BMSs connected in a daisy chain, wherein each of the slave BMSs includes a controller; and a photo relay, may include transmitting, by a first slave BMS, a control signal to the controller via optical transmission using the photo relay, when a control signal for ID assignment, which is output from the master BMS, is transmitted to a signal input terminal of the first slave BMS; assigning, by a controller of the first slave BMS, its own ID according to a predefined ID assignment protocol; and transmitting, by the controller of the first slave BMS, the control signal to a signal input terminal of a second slave BMS via a signal output terminal.

The photo relay may include a first input terminal connected to the signal input terminal; a second input terminal connected to a ground line; and an output terminal connected to the controller.

The transmitting of the control signal to the controller may include controlling, by the controller, a switch positioned on the ground line to a closed state, so that the control signal is transmitted to the controller via the photo relay.

Here, each of the slave BMSs may further include a bypass line one end of which is connected to the ground line and the other end of which is connected to the signal output terminal.

The method may further include activating the bypass line when the Nth slave BMS is in an abnormal state or in an off state and a signal for controlling a switch positioned on a ground line of the Nth slave BMS to a closed state is not input; and transmitting the control signal, which is transmitted to the Nth slave BMS and bypasses the controller of the Nth slave BMS, to a signal input terminal of the N+1th slave BMS.

According to another embodiment of the present disclosure, a battery management apparatus, connected in a daisy chain configuration with other battery management apparatuses, may include a signal input terminal connected to the signal output terminal of a previous battery management apparatus; a signal output terminal connected to the signal input terminal of a next battery management apparatus; a controller; and a photo relay configured to transmit a control signal for identifier (ID) assignment, which is input from the signal input terminal, to the controller via optical transmission.

Here, the controller may be configured to, upon receiving the control signal from the photo relay, assign its own ID according to a predefined ID assignment protocol and transmit the control signal to the signal input terminal of the next BMS through the signal output terminal.

### [Advantageous Effects]

According to embodiments of the present disclosure, it is possible to stably complete the ID assignment process, even if any one of a plurality of BMSs included in a battery system is in an abnormal state or in an off state.

### [Brief Description of the Drawings]

FIG. 1 is a block diagram of a general energy storage system.
FIG. 2 is a circuit diagram of a general battery system.
FIG. 3 is a block diagram of a battery system according to embodiments of the present invention.
FIG. 4 is a circuit diagram of a battery management apparatus according to embodiments of the present invention.
FIG. 5 illustrates an implementation example of a battery system according to embodiments of the present invention.
FIGS. 6 and 7 are reference diagrams illustrating the operation of a battery system according to embodiments of the present invention.
FIG. 8 is a flowchart illustrating an operation method of a battery system according to embodiments of the present invention.

100: battery system
110: battery
120: battery management apparatus
121: controller
122: photo relay

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a basic unit that serves to store power and a battery module refers to an assembly in which a plurality of battery cells is electrically connected.

A battery rack refers to a system of a single structure which is assembled by connecting module units set by a battery manufacturer in series/parallel and may be monitored and controlled by a battery management apparatus/system (BMS). A battery rack may include several battery modules and a battery protection unit or any other protection device. Here, the battery module may also be referred to as a battery pack depending on a device or system in which the battery is used.

A battery bank refers to a group of large-scale battery rack systems configured by connecting a plurality of battery racks in parallel. A bank BMS for a battery bank may monitor and control several rack BMSs, each of which manages a battery rack.

A battery assembly may include a plurality of electrically connected battery cells, and refers to an assembly that functions as a power supply source by being applied to a specific system or device. Here, the battery assembly may mean a battery module, a battery pack, a battery rack, or a battery bank, but the scope of the present invention is not limited to these entities.

Battery System Controller (BSC) is a top-level controller of a bank-level battery system including a plurality of battery racks and is also used as a controller in a battery system with a multiple bank-level structure.

State of Charge (SOC) refers to a current state of charge of a battery, represented in percent points [%], and State of Health (SOH) may be a current condition of a battery compared to its ideal or original conditions, represented in percent points [%].

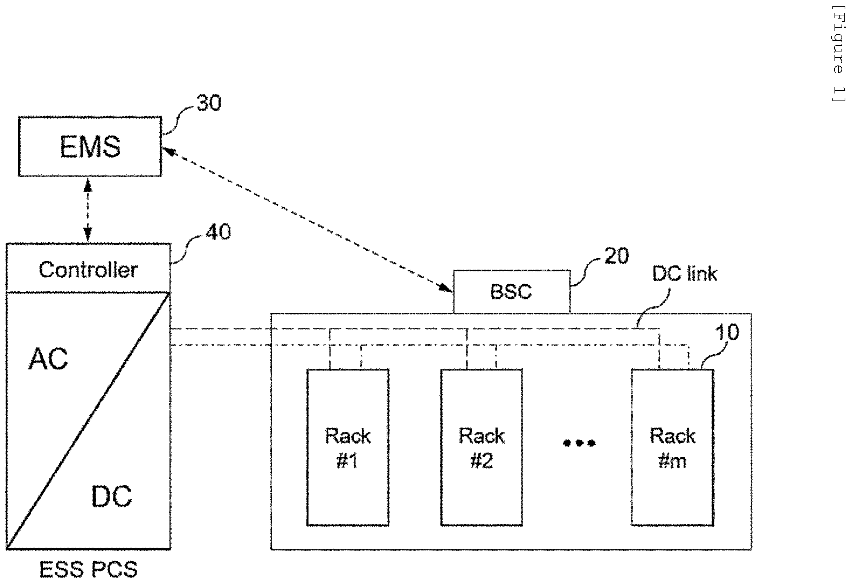

FIG. 1 is a block diagram of a general energy storage system.

In an energy storage system (ESS), a basic unit of battery for storingenergy or power isa battery cell. A seris/parallel combination of battery cells may form a battery module and multiple battery module may form a battery rack. In other words, a battery rack as a series/parallel combination of battery modules may be abasic unit of a battery system. Here, a battery module may be referred to as a battery pack depending on a device or a system in which the battery is used.

Referring to FIG.1, a battery rack 10 may include multiple battery modules and a battery protection unit or any other protection device. A battery rack may be monitored and controlled through a rack battery management system (rack BMS). The RBMS may monitor a current, a voltage and a temperature of each battery rack to be managed, calculate astateof charge (SOC) of the battery based on a monitoring result, and control charging and discharging.

Meanwhile, the battery protection unit (BPU) is a device for protecting the battery from abnormal current and fault current in a battery rack. The BPU may include a main contactor (MC), a fuse, a circuit breaker (CB), or a disconnect switch (DS). Here, the main contactor may include a positive main contactor and a negative main contactor. The BPU may control the battery system rack by rack by controlling the main contactor on/off according to control of the RBMS. The BPU may also protect the battery from short-circuit current by using a fuse when a short-circuit occurs. As such, a general battery system may be controlled through a protection device such as a BPU or a switch gear.

Meanwhile, a battery system controller (BSC) 20 may be located in each battery section which includes a plurality of batteries, peripheral circuits, and devices,so as to monitor and control objects such as a voltage, a current, a temperature, and a circuit breaker. The battery system controller may be a top-level controller of a bank-level battery system including a plurality of battery racks and is also used as a controller in a battery system with a multiple bank-level structure.

Furthermore, a power conversion system (PCS) 40 installed in each battery section may perform actual charging/discharging based on a charge/discharge command from an energy management system (EMS) 30. The power conversion system may include a power conversion unit (DC/AC inverter) and a controller. Meanwhile, the output of each BPU may be connected to a power generation device (e.g., phtovoltaic system) and the PCS 40 which is connected to a power grid, through a DC link (or DC bus). In addition, the energy management system (EMS) 30 or a power management system (PMS) may control the energy storage system in overall.

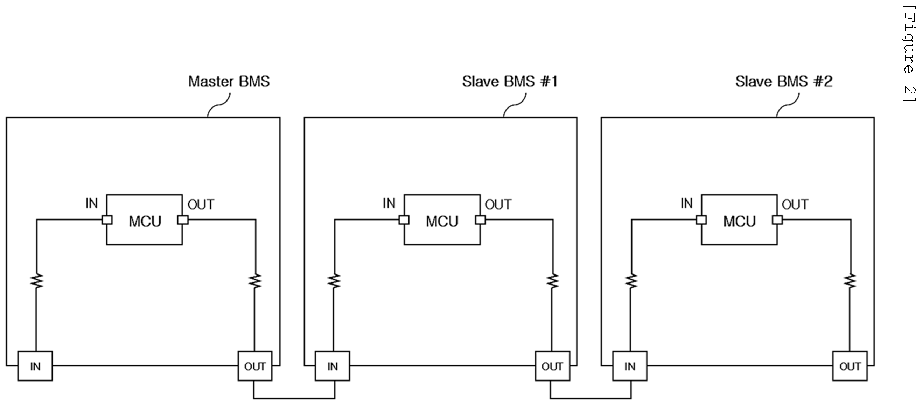

FIG. 2 is a circuit diagram of a general battery system.

For the operation of an energy storage system, communication between an upper controller (e.g., BSC or EMS) and the RBMSs is essential. For example, the upper controller may collect state data, such as current, voltage, and temperature, from each RBMS and control the operation of each rack based on the collected state data.

To allow the upper controller to distinguish information from each rack, an ID assignment process for the RBMSs may be performed before the battery system begins operation.

Generally, as shown in FIG. 2, the RBMSs may be connected in a daisy chain, with the first RBMS defined as the master BMS and the remaining RBMSs defined as slave BMSs.

When the ID assignment process begins, the master BMS sequentially transmits a control signal for ID assignment to the slave BMSs. Upon receiving the control signal, the slave BMSs may sequentially assign IDs according to a predefined ID assignment protocol. For example, if a Micro Controller Unit (MCU) of the master BMS transmits a control signal for ID assignment to slave BMS #1 through an output terminal, an MCU of slave BMS #1 may set its own ID to [#1]. Then, if the MCU of slave BMS #1 transmits a control signal for ID assignment to slave BMS #2 through an output terminal, an MCU of slave BMS #2 may set its own ID to [#2]. In this manner, the IDs of the slave BMSs may be sequentially assigned.

In a battery system where RBMSs are daisy-chained, if any intermediate slave BMS (e.g., slave BMS #1) is off or in an abnormal state, the control signal for ID assignment is not transferred to the next slave BMS (e.g., slave BMS #2). Accordingly, a BMS placed next to the BMS that is off or in an abnormal state will not be assigned an ID, and the ID assignment process will not be completed properly.

The present invention is proposed to address these issues. Various embodiments of the present invention will be described in detail below with reference to the attached drawings.

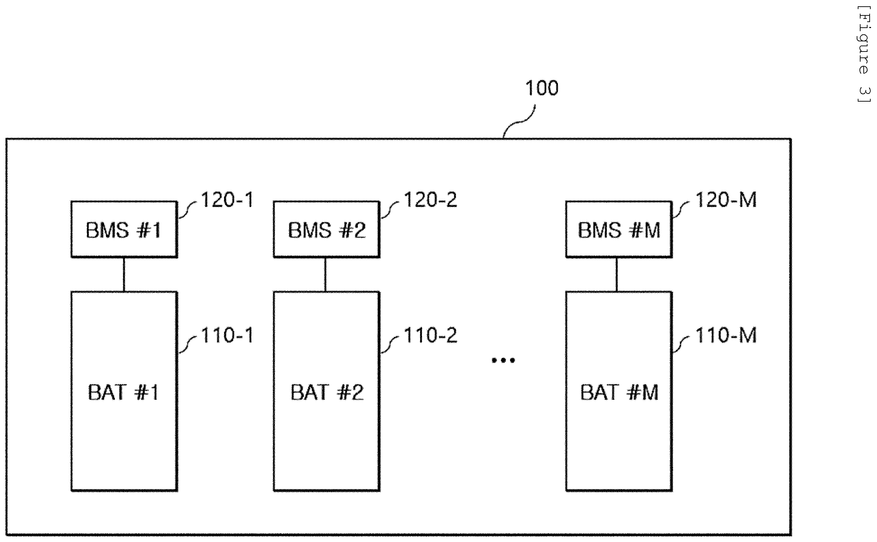

FIG. 3 is a block diagram of a battery system according to embodiments of the present invention.

Referring to FIG. 3, the battery system 100 may include a plurality of batteries 110-1 to 110-M and battery control apparatuses 120-1 to 120-M provided in correspondence with each of the batteries 110-1 to 110-M.

In the present disclosure, the battery 110 may refer to a battery rack and the battery control apparatus 120 may refer to a battery management system (RBMS). However, the scope of the present invention is not limited thereto. For example, the battery 110 may correspond to any one of a battery module, a battery pack, or a battery bank, and the battery control apparatus 120 may correspond to any one of a module BMS, a pack BMS, or a bank BMS.

The batteries 110 may be electrically connected to each other. For example, the batteries 110 may be individually connected to a direct current (DC) link and connected in parallel with other batteries.

The battery system 100 may be linked to a higher-level control apparatus. Here, the higher-level control apparatus may be a BSC or EMS that communicates with the battery control apparatuses 120-1 to 120-M and monitors and manages the state of the batteries 110-1 to 110-M.

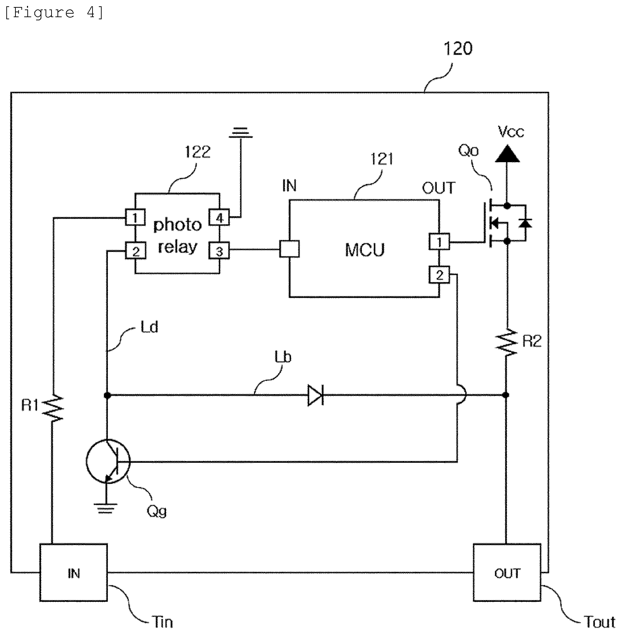

FIG. 4 is a circuit diagram of a battery management apparatus according to embodiments of the present invention.

Specifically, FIG. 4 illustrates the circuit structure of one of multiple battery management apparatuses included in a battery system. The battery management apparatus illustrated in FIG. 4 may be connected with other battery management apparatuses in a daisy-chain method.

Referring to FIG. 4, the battery management apparatus may include a signal input terminal (Tin), a signal output terminal (Tout), a controller 121, and a photo relay 122.

The signal input terminal (Tin) may be connected to a signal output terminal (Tout) of the previous battery management apparatus, and the signal output terminal (Tout) may be connected to a signal input terminal (Tin) of the next battery management apparatus.

The signal input terminal (Tin) may receive a control signal for ID assignment via the signal output terminal (Tout) of the previous battery management apparatus. Here, the control signal for ID assignment may be output from the first BMS (e.g., the master BMS) and sequentially transmitted from the next BMS to the last BMS.

The photo relay 122 may include a first input terminal 1, a second input terminal 2, a first output terminal 3, and a second output terminal 4.

A light-emitting element may be arranged between the first input terminal 1 and the second input terminal 2 and a light-receiving element may be arranged between the first output terminal 3 and the second output terminal 4. Accordingly, when a signal is applied to both ends of the first input terminal 1 and the second input terminal 2, the applied signal may be transmitted to both ends of the first output terminal 3 and the second output terminal 4 via optical transmission.

The first input terminal 1 may be connected to a signal input terminal (Tin) and the second input terminal 2 may be connected to a ground line (Ld). Here, one end of the ground line (Ld) may be connected to the second input terminal 2 and the other end of the ground line (Ld) may be connected to ground.

The first output terminal 3 may be connected to an input terminal of the controller 121 and the second output terminal 4 may be connected to ground.

Accordingly, when a control signal for ID assignment is input to the signal input terminal (Tin), the photo relay 122 may transmit the control signal to the controller 121 via optical transmission.

When the controller 121 receives the control signal for ID assignment from the photo relay 122, the controller 121 may assign its own ID according to a predefined protocol. Thereafter, the controller 121 may transfer the control signal for ID assignment to the signal input terminal (Tin) of the next battery management apparatus via the signal output terminal (Tout).

In more detail, the controller 121 may include a first output terminal 3, which may be connected to the signal output terminal (Tout). Here, a MOSFET (Qo) connected to a power supply line (Vcc) may be positioned between the first output terminal 3 and the signal output terminal (Tout). The controller 121 may control the MOSFET (Qo) to output a control signal for ID assignment to the signal output terminal (Tout). The control signal output by the controller 121 may be transferred to the signal input terminal (Tin) of the next battery management apparatus via the signal output terminal (Tout).

A ground switch (Qg) may be positioned on the ground line (Ld). Here, the ground switch (Qg) may be On/Off controlled by the controller 121.

Specifically, the controller 121 may include a second output terminal 4, which is connected to a control terminal of a ground switch (Qg). When the battery control apparatus is in a normal state, the controller 121 may control the ground switch (Qg) to a closed state (ON). Accordingly, when the battery control apparatus is in a normal state, the ground line (Ld) is activated, and when a control signal for ID assignment is input to the signal input terminal (Tin), the photo relay 122 may transmit the control signal to the controller 121 in an optical transmission manner.

The battery management apparatus may include a bypass line (Lb) that may bypass the control signal for ID assignment. Here, one end of the bypass line (Lb) may be connected to the ground line (Ld) and the other end of the bypass line (Lb) may be connected to a signal output terminal (Tout). For example, as illustrated in FIG. 4, one end of the bypass line (Lb) may be connected between the second output terminal 4 of the photo relay 122 and the ground switch (Qg), and the other end of the bypass line (Lb) may be connected between the MOSFET (Qo) and the signal output terminal (Tout).

If the battery management apparatus is in an abnormal or off state, the controller 121 cannot apply a signal to control the ground switch (Qg) to a closed state (ON), and the ground switch (Qg) is switched to an open state (OFF). Accordingly, the bypass line (Lb) is activated, allowing the control signal for ID assignment to bypass the controller 121 and be transferred to the signal input terminal (Tin) of the next battery management apparatus via the signal output terminal (Tout).

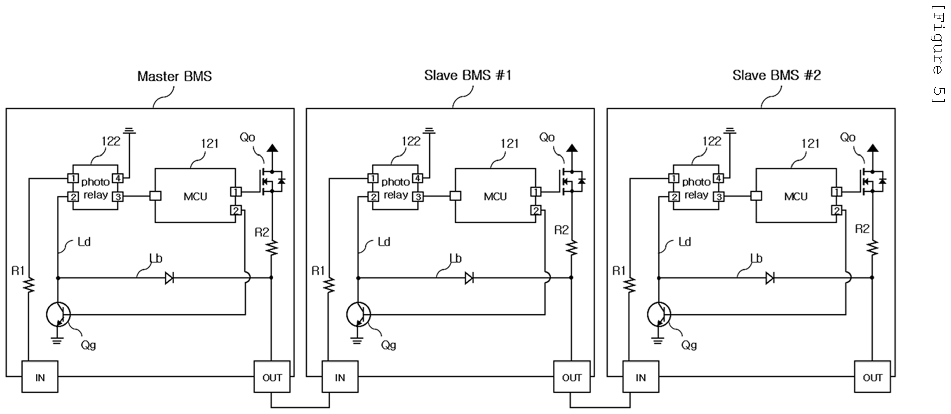

FIG. 5 illustrates an implementation example of a battery system according to embodiments of the present invention. While FIG. 5 illustrates a battery system including three BMSs, the number of BMSs included in the battery system may be increased as needed.

Referring to Figure 5, the BMSs are connected in a daisy chain, with the first BMS being defined as the master BMS and the remaining BMSs being defined as slave BMSs.

Each BMS may include a signal input terminal (Tin), a signal output terminal (Tout), a controller 121, and a photo relay 122.

The signal output terminal (Tout) of the master BMS may be connected to the signal input terminal (Tin) of the adjacent BMS, slave BMS #1. Furthermore, the signal output terminal (Tout) of slave BMS #1 may be connected to the signal input terminal (Tin) of the next BMS, slave BMS #2.

Each photo relay 122 of the BMS may include a first input terminal 1, a second input terminal 2, a first output terminal 3, and a second output terminal 4.

A light-emitting element may be positioned between the first input terminal 1 and the second input terminal 2, and a light-receiving element may be positioned between the first output terminal 3 and the second output terminal 4. Accordingly, when a signal is applied to both the first input terminal 1 and the second input terminal 2, the applied signal may be transmitted to both the first output terminal 3 and the second output terminal 4 via optical transmission.

The first input terminal 1 may be connected to a signal input terminal (Tin) and the second input terminal 2 may be connected to a ground line (Ld). One end of the ground line (Ld) may be connected to the second input terminal 2 and the other end of the ground line (Ld) may be connected to ground.

The first output terminal 3 may be connected to the input terminal of the controller 121, and the second output terminal 4 may be connected to ground.

Each of the controllers 121 of the BMSs may include a first output terminal 1, which may be connected to a signal output terminal (Tout). Here, a MOSFET (Qo) connected to a power supply line (Vcc) may be positioned between the first output terminal 1 and the signal output terminal (Tout).

A ground switch (Qg) may be positioned on the ground line (Ld) of each of the BMSs. The ground switch (Qg) may be turned on and off by the controller 121.

Specifically, the controller 121 may include a second output terminal 4, which may be connected to a control terminal of the ground switch (Qg). When the battery control apparatus is in a normal state, the controller 121 may control the ground switch (Qg) to a closed state (ON).

Each of the BMSs may include a bypass line (Lb) that can bypass a control signal for ID assignment. One end of the bypass line (Lb) may be connected between the second output terminal 4 of the photo relay 122 and the ground switch (Qg), and the other end of the bypass line (Lb) may be connected between the MOSFET (Qo) and the signal output terminal (Tout).

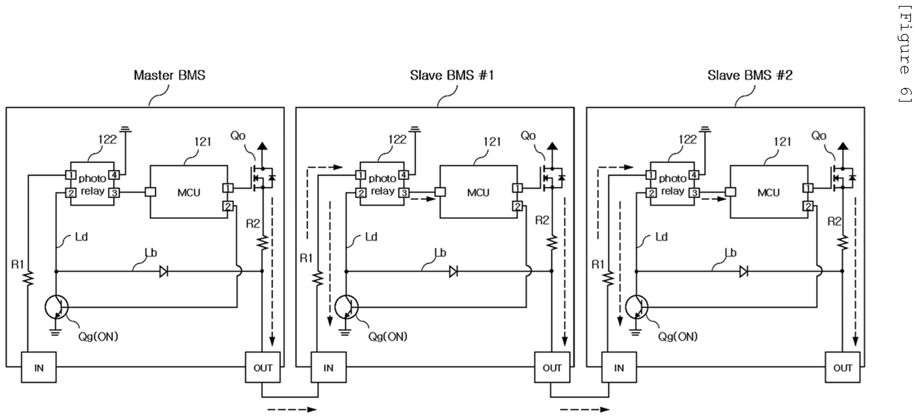

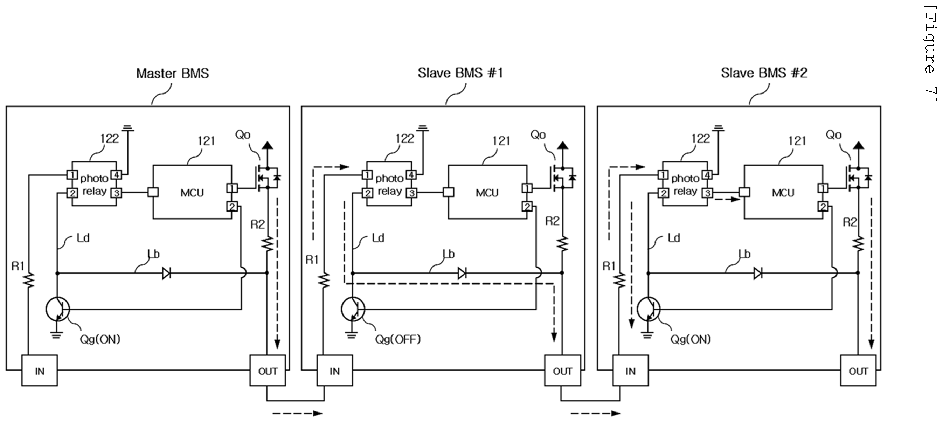

FIGS. 6 and 7 are reference diagrams illustrating the operation of a battery system according to embodiments of the present invention.

FIG. 6 illustrates the operation of the battery system when all BMSs are in a normal state.

When the ID assignment process begins, the controller 121 of each BMS may control the ground switch (Qg) to a closed state (ON). Accordingly, the ground line (Ld) of each BMS may be activated.

The master BMS may output a control signal for ID assignment. Specifically, the controller 121 of the master BMS may control the MOSFET (Qo) to output the control signal for ID assignment to the signal output terminal (Tout). The control signal output by the controller 121 may be transmitted to the signal input terminal (Tin) of slave BMS #1 via the signal output terminal (Tout).

When a control signal for ID assignment is input to the signal input terminal (Tin) of the slave BMS #1, the photo relay 122 of the slave BMS #1 may transmit the control signal to the controller 121 by optical transmission. When the controller 121 of the slave BMS #1 receives the control signal for ID assignment from the photo relay 122, the controller 121 may assign its own ID according to a predefined rule. Thereafter, the controller 121 may control the MOSFET (Qo) to output the control signal for ID assignment to the signal output terminal (Tout). The control signal output by the controller 121 may be transmitted to the signal input terminal (Tin) of the slave BMS #2 via the signal output terminal (Tout).

When the control signal for ID assignment is input to the signal input terminal (Tin) of the slave BMS #2, the photo relay 122 of the slave BMS #2 may transmit the control signal to the controller 121 in an optical transmission manner. When the controller 121 of the slave BMS #2 receives the control signal for ID assignment from the photo relay 122, the controller 121 may assign its own ID according to a predefined rule. Thereafter, the controller 121 may control the MOSFET (Qo) to output the control signal for ID assignment to the signal output terminal (Tout). Since the slave BMS #2 is the last BMS included in the battery system, the control signal output by the slave BMS #2 is not transmitted to other slave BMSs, and the ID assignment process may be completed.

FIG. 7 illustrates the operation of the battery system when a specific slave BMS (#1) is in an abnormal or off state.

When the ID assignment process begins, the controller 121 of each BMS may control the ground switch (Qg) to a closed state (ON), which activates the ground line (Ld) of each BMS.

However, if slave BMS #1 is in an abnormal or off state, the controller 121 of slave BMS #1 cannot apply a signal to control the ground switch (Qg) to a closed state (ON). Consequently, the signal to control the ground switch (Qg) of slave BMS #1 to a closed state (ON) is not input, the ground switch (Qg) of slave BMS #1 is in an open state (OFF), and the bypass line (Lb) of slave BMS #1 is activated.

The master BMS may output a control signal for ID assignment. Specifically, the controller 121 of the master BMS may control the MOSFET (Qo) to output a control signal for ID assignment to the signal output terminal (Tout). The control signal output by the controller 121 may be transferred to the signal input terminal (Tin) of the slave BMS #1 via the signal output terminal (Tout).

When the control signal for ID assignment is input to the signal input terminal (Tin) of the slave BMS #1, the control signal may bypass the controller 121 and be transmitted to the signal input terminal (Tin) of the slave BMS #2 via the bypass line (Lb).

When the control signal for ID assignment is input to the signal input terminal (Tin) of the slave BMS #2, the photo relay 122 of the slave BMS #2 may transmit the control signal to the controller 121 via optical transmission. When the controller 121 of the slave BMS #2 receives the control signal for ID assignment from the photo relay 122, the controller 121 may assign its own ID according to a predefined rule. Thereafter, the controller 121 may control the MOSFET (Qo) to output a control signal for ID assignment to the signal output terminal (Tout). Since the slave BMS #2 is the last BMS included in the battery system, the control signal output by the slave BMS #2 is not transmitted to other slave BMSs, and the ID assignment process may be completed.

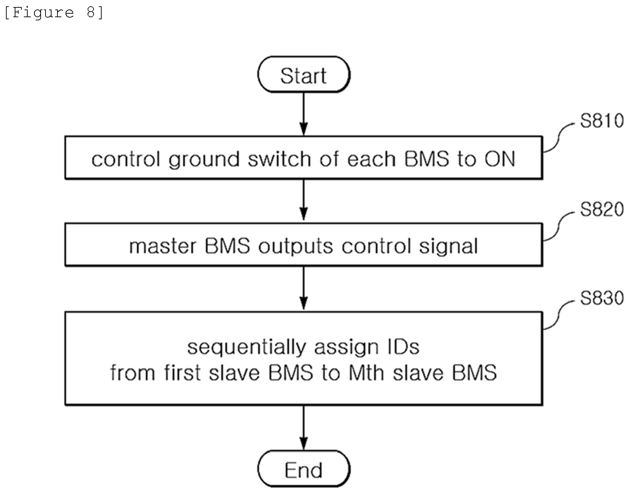

FIG. 8 is a flowchart illustrating an operation method of a battery system according to embodiments of the present invention.

The battery system may include a master BMS and M slave BMSs connected in a daisy chain.

When an ID assignment process begins, the controller of each BMS may control the ground switch (Qg) to a closed state (ON) (S810). This may activate the ground line (Ld) of each BMS.

The master BMS may output a control signal for ID assignment (S820). Specifically, the controller of the master BMS may control the MOSFET (Qo) to output a control signal for ID assignment to a signal output terminal (Tout).

The control signal output by the controller is sequentially transmitted from the first slave BMS to the Mth slave BMS, and the slave BMSs receiving the control signal may sequentially assign IDs according to a predefined ID assignment protocol (S830).

For example, when the control signal for ID assignment is input to the signal input terminal (Tin) of the first slave BMS, the photo relay of the first slave BMS may transmit the control signal to the controller by optical transmission. When the controller of the first slave BMS receives the control signal for ID assignment from the photo relay, the controller may assign its own ID according to a predefined rule. Thereafter, the controller may control the MOSFET (Qo) to output the control signal for ID assignment to the signal output terminal (Tout). The control signal output by the controller may be transmitted to the signal input terminal (Tin) of the second slave BMS via the signal output terminal (Tout). In this manner, IDs may be sequentially assigned up to the Mth slave BMS.

In the step of S810, if the Nth slave BMS is in an abnormal state or is OFF, a signal for controlling the switch positioned on the ground line of the Nth slave BMS to close may not be input, thereby activating the bypass line of the Nth slave BMS. Here, at S830, the control signal transmitted to the Nth slave BMS may bypass the controller of the Nth slave BMS and be transmitted to the signal input terminal of the (N+1) th slave BMS.

For example, if the first slave BMS is in an abnormal state or is OFF, the controller of the first slave BMS cannot apply a signal to control the ground switch (Qg) to close (ON). Accordingly, the ground switch (Qg) of the first slave BMS becomes open (OFF), and the bypass line (Lb) of the first slave BMS is activated. When the control signal for ID assignment is input to the signal input terminal (Tin) of the first slave BMS, the control signal may bypass the controller and be transmitted to the signal input terminal (Tin) of the second slave BMS through the bypass line (Lb) .

The operations of the method according to the embodiments of the present invention may be implemented as a computer-readable program or code on a computer-readable recording medium. The **computer-readable recording medium includes all types of recording devices in which data readable** by a **computer system is stored.** In addition, the computer-readable recording medium may be distributed in a network-connected computer system to store and execute computer-readable programs or codes in a distributed manner.

The operations of the method according to embodiments of the present invention may be implemented in various forms related to programs, such as a computer program or code itself, or a computer program product.

Furthermore, the computer-readable recording medium may include one or more of a volatile/transitory recording medium and a nonvolatile/non-transitory recording medium.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery system including a plurality of battery management systems BMSs connected in a daisy chain configuration, each of the BMSs comprising:
a controller; and
a photo relay configured to transmit a control signal for identifier ID assignment, which is input from a signal input terminal, to the controller via optical transmission,
wherein the controller is configured to, upon receiving the control signal from the photo relay, assign its own ID according to a predefined ID assignment protocol and transmit the control signal to the signal input terminal of the next BMS through a signal output terminal.

2. The battery system of claim 1, wherein the photo relay includes:
a first input terminal connected to the signal input terminal;
a second input terminal connected to a ground line; and
an output terminal connected to the controller.

3. The battery system of claim 2, wherein the controller controls a switch positioned on the ground line to a closed state, so that the control signal is transmitted to the controller via the photo relay.

4. The battery system of claim 2, wherein each of the BMSs further includes:
a bypass line one end of which is connected to the ground line and the other end of which is connected to the signal output terminal.

5. The battery system of claim 4, wherein the bypass line is activated when the BMS is in an abnormal state or in an off state so that the control signal bypasses the controller and is transmitted to a signal input terminal of a next BMS.

6. The battery system of claim 5, wherein a signal for controlling the switch positioned on the ground line to a closed state is not input when the BMS is in an abnormal state or in an off state, thereby activating the bypass line.

7. A method for operating a battery system including a master battery management system BMS and a plurality of slave BMSs connected in a daisy chain, wherein each of the slave BMSs includes a controller; and a photo relay, the method comprising:
transmitting, by a first slave BMS, a control signal to the controller via optical transmission using the photo relay, when a control signal for ID assignment, which is output from the master BMS, is transmitted to a signal input terminal of the first slave BMS;
assigning, by a controller of the first slave BMS, its own ID according to a predefined ID assignment protocol; and
transmitting, by the controller of the first slave BMS, the control signal to a signal input terminal of a second slave BMS via a signal output terminal.

8. The method of claim 7, wherein the photo relay includes:
a first input terminal connected to the signal input terminal;
a second input terminal connected to a ground line; and
an output terminal connected to the controller.

9. The method of claim 8, wherein the transmitting of the control signal to the controller includes:
controlling, by the controller, a switch positioned on the ground line to a closed state, so that the control signal is transmitted to the controller via the photo relay.

10. The method of claim 8, wherein each of the slave BMSs further includes:
a bypass line one end of which is connected to the ground line and the other end of which is connected to the signal output terminal.

11. The method of claim 10, further comprising:
activating the bypass line when the Nth slave BMS is in an abnormal state or in an off state and a signal for controlling a switch positioned on a ground line of the Nth slave BMS to a closed state is not input; and
transmitting the control signal, which is transmitted to the Nth slave BMS and bypasses the controller of the Nth slave BMS, to a signal input terminal of the N+1th slave BMS.

12. A battery management apparatus connected in a daisy chain configuration with other battery management apparatuses, comprising:
a signal input terminal connected to the signal output terminal of a previous battery management apparatus;
a signal output terminal connected to the signal input terminal of a next battery management apparatus;
a controller; and
a photo relay configured to transmit a control signal for identifier ID assignment, which is input from the signal input terminal, to the controller via optical transmission,
wherein the controller is configured to, upon receiving the control signal from the photo relay, assign its own ID according to a predefined ID assignment protocol and transmit the control signal to the signal input terminal of the next BMS through the signal output terminal.
